Europäisches Patentamt

European Patent Office

Office européen des brevets

(11) Veröffentlichungsnummer: **0 279 057**
**B1**

---

## (12) EUROPÄISCHE PATENTSCHRIFT

(45) Veröffentlichungstag der Patentschrift:
22.08.90

(21) Anmeldenummer: 87118466.9

(22) Anmeldetag: **12.12.87**

(51) Int. Cl.⁵: **F02D 41/02**, F02D 31/00

---

(54) Vorrichtung zur Begrenzung der Drehzahl einer ein Fahrzeug antreibenden Brennkraftmaschine.

---

(30) Priorität: **07.02.87 DE 3703802**

(43) Veröffentlichungstag der Anmeldung:
**24.08.88 Patentblatt 88/34**

(45) Bekanntmachung des Hinweises auf die Patenterteilung:
**22.08.90 Patentblatt 90/34**

(84) Benannte Vertragsstaaten:
**AT CH FR GB IT LI SE**

(56) Entgegenhaltungen:
GB-A- 2 069 187

PATENT ABSTRACTS OF JAPAN, Band 4,
Nr. 158 (M-39)[640], 5. November 1980; &
JP-A-55 107 152 (AISHIN SEIKI K.K.) 16-08-1980
PATENT ABSTRACTS OF JAPAN, Band 7,
Nr. 9 (M-185)[1154], 14. Januar 1983, Seite 134 M 185; &
JP-A 57 168 038 (NIPPON DENSO K.K.) 16-10-1982
PATENT ABSTRACTS OF JAPAN, Band 6,
Nr. 56 (M-121)[934], 13. April 1982, Seite 92 M 121; &
JP-A-56 167 945 (FUJI JUKOGYO K.K.) 23-12-1981
PATENT ABSTRACTS OF JAPAN, Band 8,
Nr. 244 (M-337)[1681], 9. November 1984, Seite 2 M 337;
& JP-A-59 120 732 (ISUZU JIDOSHA K.K.) 12-07-1984
PATENT ABSTRACTS OF JAPAN, Band 10,
Nr. 311 (M-528)[2367], 23. Oktober 1986, Seite 61 M 528;

(73) Patentinhaber: **Daimler-Benz Aktiengesellschaft,
Postfach 600202 Mercedesstrasse 136,
D-7000 Stuttgart 60(DE)**

(72) Erfinder: **Hilburger, Walter, Egerländerstrasse 63,
D-7440 Nürtingen(DE)**

(56) Entgegenhaltungen: (Fortsetzung)

& JP-A-61 122 042 (ISUZU MOTORS LTD) 10-06-1986
PATENT ABSTRACTS OF JAPAN, Band 7,
Nr. 203 (M-241)[1348], 8. September 1983,
Seite 52 M 241; & JP-A-58 101 241 (NIPPON DENSO
K.K.) 16-06-1983

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Begrenzung der Drehzahl einer ein Fahrzeug antreibenden Brennkraftmaschine gemäß Oberbegriff des Hauptanspruchs.

Bei heutigen Nutzfahrzeugen ist es üblich, um deren Brennkraftmaschinen während des Betriebs in einem hinsichtlich Kraftstoffverbrauch und Drehmoment optimalen Drehzahlbereich zu halten, eine Vorrichtung zur Begrenzung der Drehzahl, wie sie auch z. B. im Service Handbuch der Anmelderin "Drehzahl und Geschwindigkeitsbegrenzung Nutzfahrzeuge, Elektrische Anlage Band 3, Seite 71 - 1" beschrieben ist, vorzusehen. Hierzu wird an eine elektronische Steuereinheit mittels eines Impulsgebers u. a. die momentane Drehzahl der Brennkraftmaschine und ein von einem Kick-down-Schalter, der über das Fahrpedal der Brennkraftmaschine betätigbar ist, erzeugtes Signal übermittelt, wobei die Steuereinheit in Abhängigkeit dieser Eingangsgrößen ein Stellwertsignal erzeugt, das ein Stellglied zur Regelung der Brennkraftmaschinenlast (z. B. Stellmotor für die Betätigung der Regelstange einer Einspritzpumpe) derart ansteuert, daß eine fest vorgegebene Drehzahl dann nicht überschritten werden kann, wenn sich der Kick-down-Schalter noch in Öffnungsstellung befindet. Ist der Kick-down-Schalter in Schließstellung, kann die Brennkraftmaschine jedoch bis hin zu ihrer Höchstdrehzahl betrieben werden.

Ein Ausdrehen der Brennkraftmaschine bis an ihre Höchstdrehzahl kann z. B. während einer Bergauffahrt eines beladenen Fahrzeuges erforderlich werden, damit nach einem Schaltvorgang in die nächsthöhere Gangstufe noch eine ausreichend hohe Anschlußdrehzahl für eine weitere Beschleunigung des Fahrzeuges gegeben ist, was bei einem unbeladenen Fahrzeug und bei nur geringen vom Fahrzeug zu überwindenden Fahrwiderständen auch bei einer relativ niederen Drehzahl noch gewährleistet ist.

Der Erfindung liegt nun die Aufgabe zugrunde, eine gattungsgemäße Vorrichtung derart weiterzubilden, daß unterhalb einer vorgegebenen Fahrzeugzuladung oder oberhalb einer vorgegebenen zeitlichen Änderung der Brennkraftmaschinendrehzahl bzw. einer vorgegebenen Fahrzeugbeschleunigung generell eine Begrenzung der Drehzahl gegeben ist, unabhängig von der Stellung des Kickdown-Schalters.

Die Aufgabe wird erfindungsgemäß durch die Merkmale des kennzeichnenden Teiles des Hauptanspruches gelöst.

Bei unbeladenem Fahrzeug oder generell dann, wenn das Fahrzeug nur geringe Fahrwiderstände zu überwinden hat, ist es nicht erforderlich, dessen Brennkraftmaschine während eines Beschleunigungsvorgangs bis hin zur Höchstdrehzahl auszudrehen, da in diesem Fall nämlich nach einem Schaltvorgang in die nächsthöhere Gangstufe selbst eine relativ geringe Anschlußdrehzahl ausreicht, damit das Fahrzeug weiter beschleunigt werden kann. Die erfindungsgemäße Vorrichtung bewirkt nun, daß gerade unter diesen Betriebsbedingungen die Brennkraftmaschine zu keinem Zeitpunkt ihre Höchstdrehzahl erreichen kann, sondern deren Drehzahl immer auf einen vorgegebenen Wert begrenzt bleibt. Die Geräuschmission der Brennkraftmaschine kann somit auf einem relativ niederen Niveau gehalten werden.

Die Verwendung eines zum Kick-down-Schalter in Reihe angeordneten weiteren Schalters, der durch ein elektronisch angesteuertes Relais betätigt wird, stellt eine einfache Lösung dar, die besonders kostengünstig realisiert werden kann, wenn die für die Ansteuerung des Relais' benötigte Zusatzelektronik in die ohnehin schon vorhandene Steuerelektronik der Drehzahlbegrenzungsvorrichtung mit integriert wird.

Weitere vorteilhafte Ausgestaltungen der Erfindung sind den übrigen Unteransprüchen zu entnehmen.

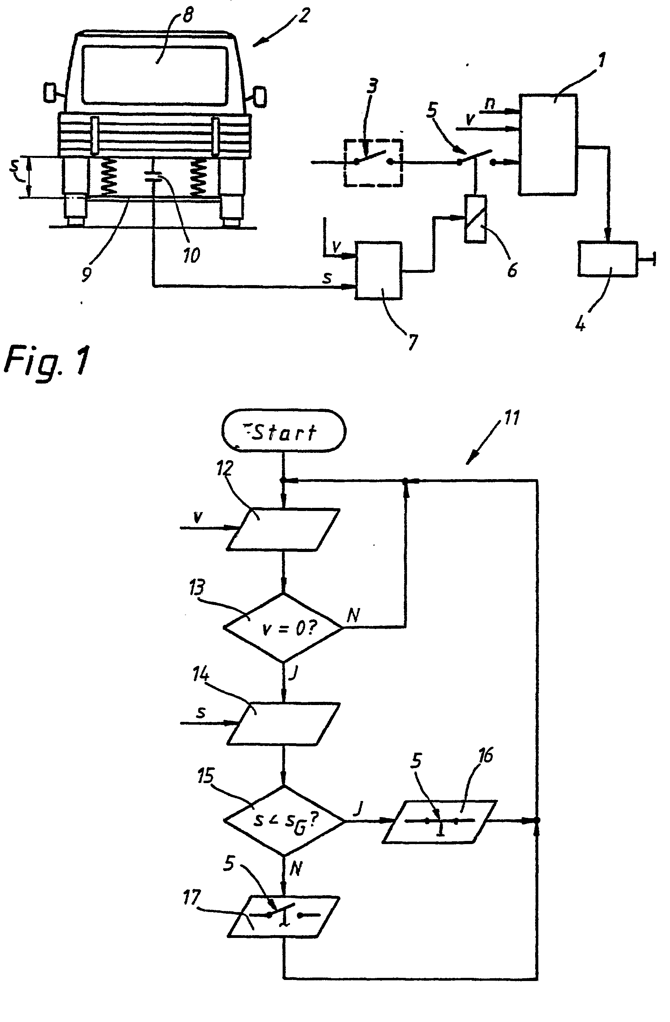

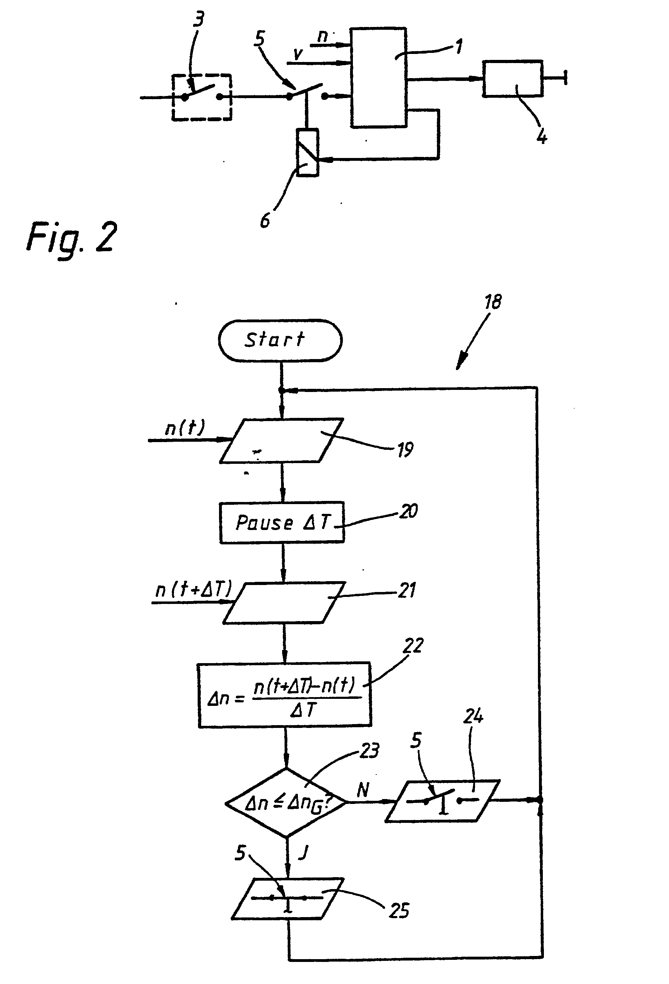

Die Erfindung ist in der Zeichnung anhand der beiden Figuren 1 und 2 dargestellt.

Im einzelnen zeigt

Figur 1 ein Ausführungsbeispiel einer erfindungsgemäßen Vorrichtung und

Figur 2 ein weiteres Ausführungsbeispiel einer erfindungsgemäßen Vorrichtung.

In Figur 1 bezeichnet 1 eine elektronische Steuereinheit einer Drehzahl- und Geschwindigkeitsbegrenzungsvorrichtung einer ein Fahrzeug 2 antreibenden Brennkraftmaschine wie sie in der eingangs genannten Literaturstelle beschrieben ist. Diese Steuereinheit 1 erzeugt in Abhängigkeit eines ihr zugeführten der momentanen Drehzahl n der Brennkraftmaschine entsprechenden Signals, eines der momentanen Fahrgeschwindigkeit v entsprechenden Signals und eines von einem Dick-down-Schalter 3, der über das Fahrpedal betätigbar ist, erzeugten Signals ein Stellwertsignal, welches ein die Brennkraftmaschinenlast beeinflussendes Stellglied 4 derart ansteuert, daß in dem Fall, in welchem sich der Kick-down-Schalter 3 noch in Öffnungsstellung befindet, eine fest vorgegebene Drehzahl nicht überschritten werden kann. Sobald der Kickdown-Schalter 3 in Schließstellung ist, kann die Brennkraftmaschine bis hin zu ihrer Höchstdrehzahl ausgedreht werden, jedoch nur, wenn sich ein in Reihe zu dem Kick-down-Schalter angeordneter weiterer Schalter 5, der über ein Relais 6 betätigbar ist, ebenfalls in Schließstellung befindet. Das Relais 6 wird von einer Zusatzelektronik 7 angesteuert und zwar in Abhängigkeit der Fahrzeuggeschwindigkeit v und eines die Fahrzeugzuladung charakterisierenden Signals. Ein solches ist der Abstand s zwischen dem Aufbau 8 und der Achse 9 des Fahrzeuges 2. Dieser Abstand s wird über einen Wegaufnehmer 10 als elektrisches Signal der Zusatzelektronik 7 zugeführt. Die Zusatzelektronik 7 ermittelt nun im Stillstand des Fahrzeuges 2 die jeweilige Zuladung und je nachdem, ob diese über oder unter einem vorgegebenen Grenzwert liegt, wird der Schalter 5 über das Relais 6 entweder geschlossen oder geöffnet. Der genaue Ablauf dieser Steuerung ist aus dem ebenfalls in Figur 1 dargestellten Flußdiagramm 11 ersichtlich.

Nach dem Start der Brennkraftmaschine erfolgt im Eingabeblock 12 die Übernahme der aktuellen Fahrzeuggeschwindigkeit v. Ist diese noch null (Verzweigungsblock 13), so wird im anschließenden Eingabeblock 14 die aktuelle Fahrzeugzuladung, für die der Abstand s ein Maß ist, eingelesen. Ist das Fahrzeug 2 beladen, also ist der Abstand s kleiner als ein vorgegebener Grenzwert $s_G$ (Verzweigungsblock 15), wird das Relais 6 über den Ausgabeblock 16 so angesteuert, daß sich der Schalter 5 in Schließstellung befindet. Bei unbeladenem Fahrzeug, also bei $s \geq s_G$, erfolgt im Ausgabeblock 17 die Beaufschlagung des Relais'6 mit einem den Schalter 5 in Öffnungsstellung haltenden Stellwertsignal. Nach der Ansteuerung des Relais'6 kehrt die Steuerung zurück zu ihrem Ausgangspunkt.

Ein geöffneter Schalter 5 bewirkt, daß ein vom geschlossenen Kick-down-Schalter 3 erzeugtes Signal zur Aufhebung der Drehzahlbegrenzung sozusagen blockiert wird, d. h. die Drehzahlbegrenzung bleibt bei einem unbeladenen Fahrzeug 2 unabhängig von der Stellung des Kick-down-Schalters 3 immer bestehen, ganz im Gegensatz zu einem beladenen Fahrzeug 2, bei dem der Schalter 5 immer in Schließstellung ist, so daß das vom Kick-down-Schalter 3 bedarfsweise erzeugte Signal zur Aufhebung der Drehzahlbegrenzung auch der Steuereinheit 1 zugeführt werden kann, d. h. es ist jederzeit möglich, die Brennkraftmaschine bis hin an ihre Höchstdrehzahl auszudrehen. Die im Verzweigungsblock 13 gestellte Geschwindigkeitsabfrage bewirkt, daß die Erfassung der Zuladung nur bei stehendem Fahrzeug 2 erfolgt, denn aufgrund während des Fahrbetriebes auftretender Schwankungen des Abstandes s (dynamische Achslasten) kann es sonst zu Fehlern bei der Ansteuerung des den Schalter 5 betätigenden Relais' 6 kommen. Während des Fahrbetriebs verzweigt die Steuerung nach dem Verzweigungsblock 13 deshalb zurück zu ihrem Ausgangspunkt. Es ist natürlich auch möglich anstelle der Geschwindigkeitsabfrage einen Block vorzusehen, in dem aus einer angemessenen Anzahl von hintereinander erfaßten Werten für s ein Mittelwert $\bar{s}$ gebildet wird, wodurch die Schwankungen von s während des Fahrbetriebes eliminiert werden können. Eine derartige Ausführung ist dann erforderlich, wenn die Zuladung eines Fahrzeuges während der Fahr verändert wird (z. B. bei Landmaschinen).

Die Zusatzelektronik 7 kann selbstverständlich auch in der Steuereinheit 1 integriert sein, wie dies in dem in Figur 2 dargestellten Ausführungsbeispiel der Fall ist. In diesem Beispiel wird das den Schalter 5 betätigende Relais 6 in Abhängigkeit der zeitlichen Änderung der Brennkraftmaschinendrehzahl, die ein Maß für die vom Fahrzeug 2 zu überwindenden Fahrwiderstände darstellt, angesteuert.

Diese zeitliche Änderung der Brennkraftmaschinendrehzahl ermittelt sich aus der Differenz zweier in einem vorgegebenen Zeitabstand aufeinanderfolgend gemessenen Drehzahlen, bezogen auf diesen Zeitabstand.

Somit sieht der Aufbau der Steuerung der in die Steuereinheit 1 integrierten Zusatzelektronik wie folgt aus (Flußdiagramm 18 in Figur 2): Nach dem Start der Brennkraftmaschine erfolgt im Eingabeblock 19 zunächst die Eingabe der Drehzahl n(t) zum Zeitpunkt t. Nach einer vorgegebenen Pause der Dauer $\Delta T$ (Block 20) wird im Eingabeblock 21 erneut die aktuelle Drehzahl $n(t+ \Delta T)$ zum Zeitpunkt $t+ \Delta T$ eingelesen. Aus diesen beiden Werten wird nun im Block 22 die Differenz gebildet und auf die Dauer der Pause $\Delta T$ bezogen.

Das Ergebnis ist die zeitliche Änderung $\Delta n$ der Brennkraftmaschinendrehzahl. Liegt dieser Wert oberhalb eines vorgegebenen Grenzwertes $\Delta n_G$, dreht die Brennkraftmaschine beim Beschleunigen also relativ schnell hoch, ist davon auszugehen, daß die zu überwindenden Fahrwiderstände relativ gering sind. Der Schalter 5 wird daher im Anschluß an diese Überprüfung (Verzweigungsblock 23) über das vom Ausgabeblock 24 an das Relais 6 übermittelte Signal in Öffnungsstellung überführt, bzw. falls es sich schon in dieser Stellung befindet, in dieser gehalten. Die Drehzahlbegrenzung bleibt damit, unabhängig von der Stellung des Kick-down-Schalters 3, bestehen.

Im anderen Fall daß $\Delta n$ also kleiner oder gleich dem vorgegebenen Grenzwert $\Delta n_G$ ist, wird der Schalter 5 über den Ausgabeblock 25 in Schließstellung gebracht, bzw. in dieser gehalten, so daß jetzt durch Überführen des Kick-down-Schalters 3 in Schließstellung die Drehzahlbegrenzung jederzeit, falls erwünscht, aufgehoben werden kann. Anstelle der zeitlichen Änderung der Brennkraftmaschinendrehzahl kann zur Ansteuerung des den Schalter 5 betätigenden Relais' 6 selbstverständlich auch die aktuelle Fahrzeugbeschleunigung verwendet werden, die analog zur zeitlichen Änderung der Brennkraftmaschinendrehzahl aus der Differenz von zwei im Abstand $\Delta T$ aufeinander gemessenen Geschwindigkeiten $v(t+ \Delta T)$ und $v(t)$ bezogen auf den Zeitabstand $\Delta T$ ermittelt wird.

## Patentansprüche

1. Vorrichtung zur Begrenzung der Drehzahl einer ein Fahrzeug antreibenden Brennkraftmaschine auf einen vorgegebenen Drehzahlgrenzwert mit einer elektronischen Steuereinheit, die in Abhängigkeit eines ihr zugeführten, der aktuellen Brennkraftmaschinendrehzahl entsprechenden Signals und eines von einem über das Fahpedal der Brennkraftmaschine betätigbaren Kick-down-Schalter erzeugten Signals ein Stellwertsignal zur Ansteuerung eines die Last der Brennkraftmaschine beeinflussenden Stellgliedes erzeugt, wobei das Stellwertsignal das Stellglied derart ansteuert, daß ein Hochdrehen der Brennkraftmaschine bis zur höchstzulässigen Drehzahl möglich ist, wenn sich der Kick-down-Schalter bei voll durchgetretenem Fahrpedal in Schließstellung befindet, und wobei ein Überschreiten des vorgegebenen Drehzahlgrenzwertes ausgeschlossen ist, wenn sich der Kick-down-schalter in Öffnungsstellung befindet, **gekennzeichnet** durch eine Korrektureinrichtung (5, 6, 7) die das vom in Schließstellung befindlichen Kick-down-Schalter (3) an die Steuereinheit (1) übermittelte Signal in ein die Drehzahlbegrenzung aktivierendes Signal wandelt, wenn die Fahrzeugzuladung unterhalb einer ersten Grenze (sG) oder die aktuelle zeitliche Änderung der Brennkraftmaschinendrehzahl bzw. die aktuelle Fahrzeugbeschleunigung oberhalb einer zweiten Grenze (ΔnG) liegt.

2. Vorrichtung nach Anspruch 1,
**dadurch gekennzeichnet,**
daß die Korrektureinrichtung durch einen in Réihe zu dem Kick-down-Schalter (3) angeordneten weiteren Schalter (5) gebildet ist, der über ein von einer Zusatzelektronik (7) in Abhängigkeit eines Fahrzeuggeschwindigkeits- und eines Fahrzeugzuladungssignals angesteuertes Relais (6) betätigbar ist.

3. Vorrichtung nach Anspruch 2,
**dadurch gekennzeichnet,**
daß das der Fahrzeugzuladung entsprechende Signal mittels eines den Abstand (s) zwischen Fahrzeugaufbau (8) und Fahrzeugachse (9) erfassenden Wegaufnehmers (10) über eine an diesen angeschlossene Steuerleitung an die Zusatzelektronik (7) übergeben wird.

4. Vorrichtung nach Anspruch 2 oder 3,
**dadurch gekennzeichnet,**
daß die Zusatzelektronik (7) in die Steuereinheit (1) integriert ist.

5. Vorrichtung nach einem der Ansprüche 2 bis 4,
**dadurch gekennzeichnet,**
daß zur Aktivierung der Drehzahlbegrenzung der weitere Schalter (5) bei geschlossenem Kick-down-Schalter (3) geöffnet ist.

## Claims

1. A device for the limitation of the number of revolutions of an internal combustion enginge driving a motor vehicle to a predetermined number of r.p.m., with an electronic control unit which, depending on a signal supplied to it, corresponding to the actual number of r.p.m. of the internal combustion engine, and on a signal produced by a kick-down switch actuatable via the gas pedal of the internal combustion engine, produces a set value signal for controlling a servo component influencing the load of the internal combustion engine, the set value signal controlling the servo component in such a manner that a high rotational speed of the internal combustion enginge is possible up to the highest permissible number of r.p.m., when the kick-down switch is in closed position when the gas pedal has been fully pressed down, and an exceeding of the predetermined limit value of the r.p.m. being ruled out when the kick-down switch is in open position, characterized by a correction device (5, 6, 7) which modifies the signal from the kick-down switch (3) in closed position transmitted to the control unit (1) into a signal activating the limitation of the r.p.m. when the useful load of the vehicle is situated under a first limit (sG) or the actual time modification of the r.p.m. of the engine, or the actual vehicle acceleration is situated above a second limit (Δ nG).

2. A device according to claim 1, characterized in that the correction device is constituted by a further switch (5) mounted in series with the kick-down switch (3) which is actuatable via a relay (6) controlled by an additional electronic arrangement (7) depending upon a vehicle speed signal and a vehicle useful load signal.

3. A device according to claim 2, characterized in that the signal corresponding to the vehicle useful load is transmitted by a displacement transducer (10) detecting the distance (s) between vehicle superstructure (8) and vehicle axle (9) via a control duct connected therewith to the additional electronic arrangement (7).

4. A device according to claim 2 or 3, characterized in that the additional electronic arrangement (7) is integrated into the control unit (1).

5. A device according to one of claims 2 to 4, characterized in that, for the activation of the limitation of the r.p.m., the further switch (5) is open when the kick-down switch (3) is closed.

## Revendications

1. Appareillage de limitation de la vitesse de rotation d'un moteur à combustion interne entraînant un véhicule à une valeur limite prédéterminée, comportant une unité électronique de commande qui produit, en fonction d'un signal, qui lui est appliqué et qui correspond à la vitesse actuelle de rotation du moteur, et d'un signal, produit par un contacteur Kick-down pouvant être actionné par l'intermédiaire de la pédale d'accélérateur du moteur, un signal de valeur de régulation servant à commander un organe de régulation agissant sur la charge du moteur, ce signal de valeur de régulation commandant l'organe de régulation de telle sorte qu'une accélération du moteur jusqu'à une vitesse de rotation maximale admissible soit possible lorsque le contacteur Kick-down se trouve en position de fermeture quand la pédale d'accélérateur est complètement abaissée, tandis qu'un dépassement de la vitesse-limite de rotation prédéterminée est empêché quand le commutateur Kick-down se trouve dans la position d'ouverture, caractérisé en ce qu'il est prévu un dispositif de correction (5, 6, 7) qui convertit le signal transmis à l'unité de commande (1) par le contacteur Kick-down (3) situé en position de fermeture en un signal déclenchant la limitation de vitesse de rotation lorsque la charge utile du véhicule est inférieure à une première limite (SG) ou bien lorsque la variation temporelle actuelle de la vitesse de rotation du moteur ou l'accélération actuelle du véhicule est supérieure à une seconde limite (ΔnG).

2. Appareillage selon la revendication 1, caractérisé en ce que le dispositif de correction est constitué par un autre contacteur (5), disposé en série avec le contacteur Kick-down (3) et qui peut être actionné par un relais (6) commandé par un système électronique additionnel (7) en fonction d'un signal de vitesse de véhicule et d'un signal de charge utile de véhicule.

3. Appareillage selon la revendication 2, caractérisé en ce que le signal correspondant à la charge utile du véhicule est transmis au système électronique additionnel (7) au moyen d'un capteur de distance (10), captant l'espacement (S) entre la caisse (8) du véhicule et son essieu (9), et par l'intermédiaire d'un conducteur de commande relié à ce capteur.

4. Appareillage selon une des revendications 2 ou 3, caractérisé en ce que le système électronique additionnel (7) est intégré dans l'unité de commande (1).

5. Appareillage selon une des revendications 2 à 4, caractérisé en ce que, pour le déclenchement de la limitation de vitesse de rotation, l'autre contacteur (5) est ouvert quand le contacteur Kick-down (3) est fermé.

Fig. 1

Fig. 2